# EUROPÄISCHE PATENTSCHRIFT

(11) **EP 1 824 732 B1**
(45) Veröffentlichungstag und Bekanntmachung des Hinweises auf die Patenterteilung: **10.09.2008**
(21) Anmeldenummer: 05825645.4
(22) Anmeldetag: 13.12.2005
(51) Int. Cl.: B64C 11/06

(54) **PROPELLERBLATTLAGERUNG, INSBESONDERE FÜR LÄNGSAXIAL VERSTELLBARE PROPELLERBLÄTTER VON FLUGZEUGPROPELLERN**
PROPELLER BLADE BEARING, ESPECIALLY FOR PROPELLER BLADES OF AIRCRAFT PROPELLERS THAT CAN BE ADJUSTED ALONG THEIR LONGITUDINAL AXIS
SUPPORT DE PALES D'HELICE, CONÇU EN PARTICULIER POUR DES PALES D'HELICE D'AVION POUVANT ETRE DEPLACEES DANS L'AXE LONGITUDINAL

(30) Priorität: 14.12.2004 DE 102004060022
(43) Veröffentlichungstag der Anmeldung: 29.08.2007
(73) Patentinhaber: Schaeffler KG, 97421 Schweinfurt (DE)
(72) Erfinder: SEBALD, Wilhelm, 97631 Bad Königshofen (DE)
(86) Internationale Anmeldenummer: PCT/DE2005/002248
(87) Internationale Veröffentlichungsnummer: WO 2006/063572

(56) Entgegenhaltungen:
- DE-C1- 3 818 466
- GB-A- 469 774
- US-A- 2 438 542

## Beschreibung

### Gebiet der Erfindung

Die Erfindung betrifft eine Propellerblattlagerung nach den oberbegriffsbildenden Merkmalen des Patentanspruchs 1, und sie ist insbesondere vorteilhaft an längsaxial verstellbaren Propellerblättern von Flugzeugpropellern realisierbar.

### Hintergrund der Erfindung

Dem Fachmann für Propellerantriebe an Flugzeugen ist es allgemein bekannt, dass verstellbare Propellerblätter an Flugzeugpropellern der Optimierung des Propellerwirkungsgrades dienen, um für jede Propellerdrehzahl eine optimale Propellerblattstellung zu erhalten. Aus diesem Grund ist es erforderlich, die Propellerblätter des Flugzeugpropellers einzeln an der Propellernabe zu befestigen und zur leichteren Verstellbarkeit in entsprechenden Wälzlagern zu lagern. Eine solche Propellerblattlagerung ist beispielsweise aus der britischen Patentschrift GB 2 244 525 A vorbekannt und besteht im Wesentlichen aus einer Propellernabe, an der mehrere Propellerblätter in einer entsprechenden Anzahl Blattaufnahmen eines Blattträgerrings einzeln befestigt sind. Jedes Propellerblatt weist dabei an seinem Blattfuß ein Primärverstelllager und ein Sekundärverstelllager auf und ist innerhalb einer Blattaufnahme längsaxial drehbar gelagert, wobei sowohl das Primärverstelllager als auch das Sekundärverstelllager als Schrägwälzlager ausgebildet sind, die längsaxial zueinander beabstandet angeordnet und gegeneinander verspannt sind. Beide Verstelllager weisen jeweils einen oberen Laufring und einem unteren Laufring sowie einer Reihe zwischen diesen Laufringen angeordneten Wälzkörpern auf, wobei das Primärverstelllager in konkreter Ausführung durch ein Schrägkugellager gebildet wird, während das Sekundärverstelllager als Schrägrollenlager ausgebildet ist. Zur Schmierung der gesamten Verstellmechanik für die Propellerblätter ist in der Propellernabe ein Schmierölreservoir angeordnet, aus welchem auch das Primär- und das Sekundärlager bei Drehung des Propellers durch Fliehkraft zur Vermeidung von Verschleiß mit Schmieröl versorgt werden.

Die Montage der bekannten Propellerblattlagerung erfolgt dabei im Wesentlichen derart, dass eine den Blattfuß des Propellerblattes umschließende Lagertraghülse, die jeweils den Sitz der oberen Laufringe der Verstelllager bildet, zunächst in zwei Hälften am Blattfuß montiert wird, bevor die ebenfalls aus zwei Hälften bestehenden oberen Lagerringe der Verstelllager auf diese aufgesetzt und in geeigneter Weise zu durchgehenden Ringen verbunden werden können. Anschließend wird ein zweigeteilter Käfig um den oberen Laufring des Sekundärverstelllagers gelegt und zu einem Ring verbunden, so dass die Wälzkörper des Sekundärverstelllagers in den Käfig eingesetzt werden können. Danach wird eine Hülse, die außenseitig teilweise ein Gewinde aufweist und im montierten Zustand mit einem Teil ihrer Innenseite die untere Laufbahn des Sekundärverstelllagers bildet, zusammen mit einem Käfig für die Wälzkörper des Primärverstelllagers lose über den Blattfuß des Propellerblattes geschoben und anschließend die Wälzkörper des Primärverstelllagers in den Käfig eingesetzt. Hiernach wird die lose Hülse am Blattfuß über die Wälzkörper des Sekundärverstelllagers gezogen bis sie an diesen innenseitig als unterer Laufring anliegt und anschließend wird eine zweiteilige Blattaufnahme, die innenseitig den ebenfalls zweigeteilten oberen Laufring des Primärverstelllagers enthält, derart um den Blattfuß herum gespannt, dass der obere Laufring des Primärverstelllagers auf dessen Wälzkörper aufliegt. Abschließend wird dann ein sich gegen die montierte Blattaufnahme abstützender Gewindespannring auf das Gewinde der bis dahin losen Hülse am Blattfuß aufgeschraubt, so dass einerseits der durch die Innenseite der losen Hülse gebildete äußere Laufring des Sekundärverstelllagers gegen dessen Wälzkörper verspannt wird und andererseits beide Verstelllager der Propellerblattlagerung gegeneinander verspannt werden. Gleichzeitig wird dabei durch zwei zwischen der innenseitig als unterer Lagerring des Sekundärverstelllagers ausgebildeten Hülse und dem Lagertragring sowie zwischen dieser Hülse und der Blattaufnahme angeordnete Dichtungen die Austrittsstelle des Blattfußes aus der Blattaufnahme öldicht abgedichtet.

Nachteilig bei dieser bekannten Propellerblattlagerung ist es jedoch, dass die spezielle Anordnung und Ausbildung der Verstelllager für das Propellerblatt eine größtenteils zweigeteilte Ausbildung der gesamten Propellerlagerung erfordert, durch die eine Vielzahl an Einzelteilen für jede Propellerlagerung notwendig wird, die vor allem das Fehlerrisiko bei deren Montage in nachteiliger Weise erhöhen. Da diese Einzelteile zudem äußerst präzise bzw. zueinander passgenau gefertigt und montiert werden müssen, entsteht neben dem hohen Aufwand für deren Herstellung auch einen erheblicher Zeit- und Kostenaufwand für die Montage der Propellerblätter an der Propellernabe, so dass eine derartige Propellerblattlagerung insgesamt sehr hohe Herstellungskosten verursacht. Darüber hinaus ist es aus sicherheitstechnischer Sicht ein erheblicher Nachteil dieser bekannten Propellerblattlagerung, dass das bei Drehung des Propellers durch Fliehkraft aus dem Schmierölreservoir in der Propellernabe aufsteigende Schmieröl durch die beiden Verstelllager ungehindert hindurch strömen kann und somit bei hoher Propellerdrehzahl mit einem der Zentrifugalbeschleunigung entsprechenden Druck an den beiden an der Austrittsstelle des Blattfußes aus der Blattaufnahme angeordneten Dichtungen anliegt. Dies kann schon bei einer schadhaften Dichtung an einer der Propellerblattlagerungen des Flugzeugpropellers zum Verlust des gesamten Schmieröls in der Propellernabe führen, so dass es zum Ausfall der Schmierung des Verstellmechanismus und der Verstelllager der Propellerblattlagerung sowie zu Funktionsstörungen beim Antrieb des Flugzeuges kommen kann.

### Aufgabe der Erfindung

Ausgehend von den dargelegten Nachteilen des bekannten Standes der Technik liegt der Erfindung deshalb die Aufgabe zu Grunde, eine Propellerblattlagerung, insbesondere für längsaxial verstellbare Propellerblätter von Flugzeugpropellern, zu konzipieren, mit welcher der Aufwand für die Fertigung der Einzelteile der Lagerung und der Aufwand für die Montage des Propellerblattes an der Propellernabe auf ein Minimum reduzierbar ist und welche mit einer fail-safe-Funktion ausgebildet ist, die bei einer schadhaften Dichtung an der Austrittsstelle des Blattfußes aus dem Blattträgerring einen Verlust des gesamten Schmieröls in der Propellernabe wirksam verhindert.

### Beschreibung der Erfindung

Erfindungsgemäß wird diese Aufgabe bei einer Propellerblattlagerung nach dem Oberbegriff des Anspruchs 1 derart gelöst, dass jedes Propellerblatt als jeweils mit beiden Laufringen und den Wälzkörpern des Primärverstelllagers und des Sekundärverstelllagers komplett vormontierte Baueinheit ausgebildet ist, die durch eine obere, mit einem Dichtring zum Blattfuß des Propellerblattes ausgebildete Ringmutter in der Blattaufnahme des Blattträgerrings schmieröldicht verschraubbar ist. Dabei stehen die oberen Laufringe des Primär- und des Sekundärverstelllagers mit jeweils deren untere Laufringe axial einseitig umschließenden Schmierölschwallringen in Verbindung, durch die das bei Drehung der Propellerblätter durch Fliehkraft aus dem Schmiermittelreservoir in der Propellernabe aufsteigende Schmieröl größtenteils innerhalb der Verstelllager speicherbar ist. Gleichzeitig wird durch die Schmierölschwallringe an den Verstelllagern im Zusammenhang mit einer definierten Füllmenge im Schmierölreservoir gewährleistet, dass das Schmieröl in nur geringer Menge nahezu drucklos an der Dichtung der oberen Ringmutter anliegt.

In zweckmäßiger Weiterbildung der erfindungsgemäß ausgebildeten Propellerblattlagerung wird die aus dem Propellerblatt und den kompletten Verstelllagern bestehende vormontierte Baueinheit dabei dadurch gebildet, dass das Primärverstelllager und das Sekundärverstelllager über zwischen diesen angeordnete Distanzhalter durch eine untere Ringmutter gegen einen Ringabsatz am Blattfuß des Propellerblattes verspannt sind. Dieser Ringabsatz ist dabei an einem konischen Übergangsbereich des Blattfußes zum Propellerblatt angeordnet und bildet axial zugleich den Lagersitz für den oberen Laufring des im Durchmesser größer als das Primärverstelllager ausgebildeten Sekundärverstelllagers. Der Lagersitz des Primärverstelllagers wird dagegen über dessen unteren Laufring realisiert und ist direkt am Blattfuß des Propellerblattes angeordnet, wobei das untere Ende des Blattfußes des Propellerblattes mit einem zum Innengewinde der unteren Ringmutter komplementären Außengewinde ausgebildet ist.

Als Distanzhalter zwischen den Verstelllagern kommen darüber hinaus als weiteres Merkmal der erfindungsgemäß ausgebildeten Propellerblattlagerung zum einen eine zwischen dem unteren Laufring des Primärverstelllagers und dem oberen Laufring des Sekundärverstelllagers angeordnete innere Distanzhülse zum Einsatz, die im Querschnitt eine der Form des Blattfußes angepasste, nach oben sich konisch öffnende Form aufweist. Zum anderen ist als weiterer Distanzhalter zwischen dem oberen Laufring des Primärverstelllagers und dem unteren Laufring des Sekundärverstelllagers ein äußerer Distanzring angeordnet, der zur Reduzierung der Anzahl der Einzelteile der Propellerblattlagerung und des Montagefehlerrisikos bevorzugt als einteiliges Integralbauteil mit dem unteren Laufring des Sekundärverstelllagers ausgebildet ist. Unabhängig davon, ob der äußere Distanzring einteilig mit dem unteren Laufring des Sekundärverstelllagers oder als separates Bauteil ausgebildet ist weist dieser äußere Distanzring als weiteres integriertes Element an seiner Außenseite zusätzlich noch einen durchmesservergrößerten Ringsteg auf, über welchen der Blattfuß des Propellerblattes durch die obere Ringmutter in der Blattaufnahme des Blattträgerrings der Propellernabe letztendlich verschraubbar ist.

In vorteilhafter Ausgestaltung der erfindungsgemäß ausgebildeten Propellerblattlagerung wird es des Weiteren vorgeschlagen, dass der untere Laufring des Primärverstelllagers bevorzugt einen in Bezug auf die Längsmittelachse der Propellernabe um 180° gedrehten T-förmigen Profilquerschnitt aufweist und mit der Innenseite des Querschenkels dieses Profils den Lagersitz des Primärverstelllagers bildend auf den Blattfuß des Propellerblatts aufgesetzt ist. Die Unterseite dieses Querschenkels ist dabei zugleich als Druckfläche für die untere Ringmutter ausgebildet, während der Längsschenkel und der äußere Teil des Querschenkels des Profils des unteren Laufrings die Wälzkörper-Lauffläche des unteren Laufrings des Primärverstelllagers bilden. Die durch das Profil des unteren Laufrings des Primärverstelllagers sich bildende Ringfläche zwischen dem Blattfuß des Propellerblatts und dem Längsschenkel dieses Profils wird darüber hinaus in vorteilhafter Weise als Anlagefläche genutzt, an der sich die am unteren Laufring des Sekundärlagers anliegende innere Distanzhülse zwischen dem Primärverstelllager und dem Sekundärverstelllager am Primärlager abstützt.

Ein weiteres Merkmal der erfindungsgemäß ausgebildeten Propellerblattlagerung ist es, dass die mit den oberen Laufringen des Primär- und des Sekundärverstelllagers in Verbindung stehenden Schmierölschwallringe bevorzugt als einteilig mit den oberen Laufringen ausgebildete Winkelringe ausgebildet sind, die mit dem Horizontalschenkel ihres Profils eine Verlängerung der Oberseite der oberen Laufringe bilden und mit dem Vertikalschenkel ihres Profils zur Propellernabe gerichtet sind. Als besonders vorteilhaft hat es sich dabei erwiesen, den Vertikalschenkel der Schmierölschwallringe beider Verstelllager jeweils mit einer Länge auszubilden, die etwa der Höhe des oberen Laufrings des jeweiligen Verstelllagers entspricht, damit die oberen Laufringe beider Verstelllager zusammen mit den Schmierölschwallringen einen relativ großen Ringraum bilden. In diesem jeweils den unteren Laufring der Verstelllager umschließenden und lediglich zur Propellernabe offenen Ringraum kann sich somit eine relativ große Menge des bei Drehung des Propellers zentrifugalbeschleunigten Schmieröls aus dem Schmierölreservoir der Propellernabe sammeln und immer für eine ausreichend Schmierung der Verstelllager sorgen. Die einteilige Ausbildung der Schmierölschwallringe mit den oberen Laufringen der Verstelllager dient dabei wiederum der Reduzierung der Einzelteilanzahl der Propellerlagerung, wobei jedoch nicht ausgeschlossen sein soll, dass diese Schmierölschwallringe auch als separate Bauteile ausgebildet und in geeigneter Weise mit den oberen Laufringen der Verstelllager verbunden werden können.

Schließlich wird es noch als letztes Merkmal der erfindungsgemäß ausgebildeten Propellerblattlagerung vorgeschlagen, dass der Vertikalschenkel des Schmierölschwallrings des Primärverstelllagers derart zwischen dem Längsschenkel des Profils des unteren Laufrings des Primärverstelllagers und der inneren Distanzhülse angeordnet ist, dass ein verbleibender Spalt zwischen der Innenseite des Schmierölschwallrings und der Außenseite des Längsschenkels des unteren Laufrings sowie zwischen der Außenseite der Distanzhülse und der Innenseite des Schmierölschwallrings ein Schmieröl-Überlauflabyrinth zum Sekundärverstelllager bildet. Der ebenfalls zur Propellernabe gerichtete Schenkel des Schmierölschwallrings des Sekundärverstelllagers ist dabei in gleicher Weise zwischen dem unteren Laufring des Sekundärverstelllagers und der oberen Ringmutter angeordnet, so dass auch hier ein verbleibender Spalt zwischen der Innenseite des Schmierölschwallrings und der Außenseite des unteren Laufrings sowie zwischen der Außenseite des Schmierölschwallrings und der Innenseite der Ringmutter ein Schmieröl-Überlauflabyrinth zur Dichtung der oberen Ringmutter bildet.

Diese Schmieröl-Überlauflabyrinthe an beiden Verstelllagern dienen der Druckminderung des bei Drehung des Propellers zentrifugalbeschleunigten Schmieröls aus der Propellernabe, durch die das Schmieröl an der die Austrittsstelle des Blattfußes aus der Blattaufnahme des Blattträgerrings abdichtenden Dichtung an der oberen Ringmutter nahezu drucklos anliegt. Dies geschieht derart, dass das aus der Propellernabe aufsteigende Schmieröl zunächst nur den durch den Schmierölschwallring gebildeten Ringraum im Primärlager befüllt. Die nicht mehr im Primärverstelllager speicherbare Menge Schmieröl wird dann durch Fliehkraft durch das Überlauflabyrinth am Primärverstelllager in den zwischen der inneren Distanzhülse und dem äußeren Distanzring gebildeten Hohlraum gepresst, von wo es durch Fliehkraft in das Sekundärverstelllager gelangt und dort wiederum in dem durch dessen Schmierölschwallring gebildeten Ringraum gespeichert wird. Bei entsprechender Bemessung der Schmieröl-Füllmenge kann dann lediglich nur noch eine geringe Menge überschüssiges Schmieröl über das Schmieröl-Überlauflabyrinth am Sekundärverstelllager bis zur Dichtung an der oberen Ringmutter vordringen, wobei diese geringe Menge Schmieröl keine schadensverursachenden Druckbelastungen mehr auf die Dichtung ausübt. Sollte es dennoch zu einer Beschädigung der Dichtung an der oberen Ringmutter kommen, kann es auch nur zum Verlust dieser geringen Menge Schmieröl kommen, da der Großteil des Schmieröls durch die Schmierölschwallringe in den Verstelllagern der Propellerblattlagerung gespeichert wird.

Die erfindungsgemäß ausgebildete Propellerblattlagerung weist somit gegenüber den aus dem Stand der Technik bekannten Propellerblattlagerungen den Vorteil auf, dass durch die Ausbildung des Propellerblattes als komplett mit dem Primärlager und dem Sekundärlager vormontierte Baueinheit der Aufwand für die Fertigung der Einzelteile der Propellerblattlagerung und der Aufwand für die Montage der Propellerblätter an der Propellernabe auf ein Minimum reduziert wird. Dabei können bei der Vormontage der Baueinheit sowohl für das Primärverstelllager als auch für das Sekundärverstelllager lediglich an ihren Laufringen geringfügig modifiziert ausgebildete, an sich bekannte Schrägwälzlager verwendet werden, deren Fertigung kostengünstig ist und die mit einer exakt eingestellten Vorspannung zueinander am Blattfuß befestigt werden. Das so vormontierte Propellerblatt kann dann in einer einteiligen Blattaufnahme des Blattträgerrings an der Propellernabe eingesetzt werden und wird lediglich durch eine obere Ringmutter an der Propellernabe verschraubt, so dass durch die geringe Anzahl an Einzelteilen für die Propellerblattlagerung der Montageaufwand und das Montagefehlerrisiko erheblich vermindert und insgesamt die Herstellungskosten der Propellerblattlagerung reduziert werden. Darüber hinaus weist die erfindungsgemäß ausgebildete Propellerblattlagerung durch die Ausbildung des Primärverstelllagers und des Sekundärverstelllagers mit jeweils deren untere Laufringe axial umschließenden Schmierölschwallringen eine jederzeit ausreichende Schmierung der Verstellmechanik und der Verstelllager sowie eine fail-safe-Funktion auf, durch die bei einer schadhaften Dichtung an der Austrittsstelle des Blattfußes aus dem Blattträgerring lediglich eine geringfügige Menge Schmieröl verloren gehen kann, jedoch ein Verlust des gesamten Schmieröls in der Propellernabe wirksam verhindert wird.

### Kurze Beschreibung der Zeichnungen

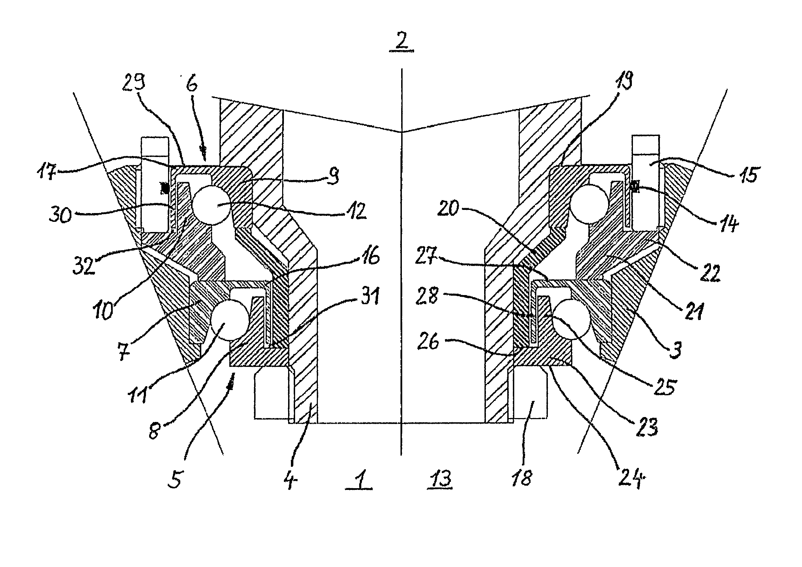

Eine bevorzugte Ausführungsform der erfindungsgemäß ausgebildeten Propellerblattlagerung wird nachfolgend unter Bezugnahme auf die beigefügte Zeichnung näher erläutert. Die einzige Figur zeigt dabei eine Schnittansicht durch eine erfindungsgemäß ausgebildete Lagerung eines Propellerblattes.

### Ausführliche Beschreibung der Zeichnungen

Aus der Zeichnung geht deutlich eine Propellerblattlagerung für ein längsaxial verstellbares Propellerblatt eines Flugzeugpropellers hervor, die im Wesentlichen aus einer nicht näher dargestellten Propellernabe 1 besteht, an der mehrere in der Zeichnung nur angedeutete Propellerblätter 2 in einer entsprechenden Anzahl Blattaufnahmen 3 eines Blattträgerrings einzeln befestigt sind. Jedes Propellerblatt 2 weist dabei an seinem Blattfuß 4 ein Primärverstelllager 5 und ein Sekundärverstelllager 6 auf und ist innerhalb einer Blattaufnahme 3 längsaxial drehbar gelagert, wobei sowohl das Primärverstelllager 5 als auch das Sekundärverstelllager 6 als Schrägwälzlager ausgebildet sind, die längsaxial zueinander beabstandet angeordnet und gegeneinander verspannt sind. Das Primärverstelllager 5 weist ebenso wie das Sekundärverstelllager 6 einen oberen Laufring 7, 9 und einen unteren Laufring 8, 10 sowie zwischen diesen Laufringen 7, 9, 8, 10 angeordnete Wälzkörper 11, 12 auf, wobei beide Verstelllager 5, 6 in konkreter Ausführung durch Schrägkugellager mit unterschiedlichen Lagerbohrungen gebildet werden. Zur Schmierung der gesamten Verstellmechanik für die Propellerblätter 2 ist in der Propellernabe 1 ein in der Zeichnung ebenfalls nur angedeutetes Schmierölreservoir 13 angeordnet, aus welchem das Primär- und das Sekundärlager 5, 6 bei Drehung des Propellers durch Fliehkraft mit Schmieröl versorgt werden.

Des Weiteren geht aus der Zeichnung klar hervor, dass jedes Propellerblatt 2 erfindungsgemäß als jeweils mit beiden Laufringen 7, 9, 8, 10 und den Wälzkörpern 11, 12 des Primärverstelllagers 5 und des Sekundärverstelllagers 6 komplett vormontierte Baueinheit ausgebildet ist, die durch eine obere, mit einer Dichtung 14 zum Blattfuß 4 des Propellerblattes 2 ausgebildete Ringmutter 15 in der Blattaufnahme 3 des Blattträgerrings schmieröldicht verschraubbar ist. Deutlich sichtbar stehen dabei die oberen Laufringe 7 und 9 des Primär- und des Sekundärverstelllagers 5 und 6 mit jeweils deren untere Laufringe 8 und 10 axial einseitig umschließenden Schmierölschwallringen 16, 17 in Verbindung, durch die das bei Drehung der Propellerblätter 2 durch Fliehkraft aus dem Schmiermittelreservoir 13 in der Propellernabe 1 aufsteigende Schmieröl größtenteils innerhalb der Verstelllager 5, 6 gespeichert wird und durch die im Zusammenhang mit einer definierten Füllmenge im Schmierölreservoir 13 das Schmieröl in nur geringer Menge nahezu drucklos an der Dichtung 14 der oberen Ringmutter 15 anliegt.

Die aus dem Propellerblatt 2 und den kompletten Verstelllagern 5, 6 bestehende vormontierte Baueinheit wird dabei dadurch gebildet, dass das Primärverstelllager 5 und das Sekundärverstelllager 6 über zwischen diesen angeordnete Distanzhalter durch eine untere Ringmutter 18 gegen einen Ringabsatz 19 am Blattfuß 4 des Propellerblattes 2 verspannt sind. Wie die Zeichnung weiterhin zeigt, sind die Distanzhalter zwischen den Verstelllagern 5, 6 dabei einerseits als zwischen dem unteren Laufring 8 des Primärverstelllagers 5 und dem oberen Laufring 9 des Sekundärverstelllagers 6 angeordnete innere Distanzhülse 20 sowie andererseits als zwischen dem oberen Laufring 7 des Primärverstelllagers 5 und dem unteren Laufring 10 des Sekundärverstelllagers 6 angeordneter äußerer Distanzring 21 ausgebildet, wobei der äußere Distanzring 21 als einteiliges Integralbauteil mit dem unteren Laufring 10 des Sekundärverstelllagers 6 ausgebildet ist. Zusätzlich weist dieser äußere Distanzring 21 noch einen durchmesservergrößerten Ringsteg 22 auf, über welchen der Blattfuß 4 des Propellerblattes 2 durch die obere Ringmutter 15 im Blattträgerring 3 der Propellernabe 1 verschraubt wird.

Weiterhin wird durch die Zeichnung deutlich, dass der untere Laufring 8 des Primärverstelllagers 5 einen in Bezug auf die Längsmittelachse der Propellernabe 1 um 180° gedrehten T-förmigen Profilquerschnitt aufweist und mit der Innenseite des Querschenkels 23 dieses Profils auf den Blattfuß 4 des Propellerblatts 2 aufgesetzt ist. Die Unterseite 24 dieses Querschenkels 23 ist dabei zugleich als Druckfläche für die untere Ringmutter 18 ausgebildet, während der Längsschenkel 25 und ein Teil des Querschenkels 23 des Profils des unteren Laufrings 8 des Primärverstelllagers 5 die als Kugelrille ausgebildete Wälzkörper-Lauffläche des unteren Laufrings 8 bilden. Die durch das Profil des unteren Laufrings 8 des Primärverstelllagers 5 sich bildende Ringfläche 26 zwischen dem Blattfuß 4 des Propellerblatts 2 und dem Längsschenkel 25 dieses Profils wird darüber hinaus als Anlagefläche genutzt, an der sich die am unteren Laufring 8 des Sekundärlagers 6 anliegende innere Distanzhülse 20 zwischen dem Primärverstelllager 5 und dem Sekundärverstelllager 6 am Primärlager 5 abstützt.

Die mit den oberen Laufringen 7, 9 des Primär- und des Sekundärverstelllagers 5, 6 in Verbindung stehenden Schmierölschwallringe 16, 17 werden im Übrigen, wie in der Zeichnung deutlich dargestellt ist, durch einteilig mit den oberen Laufringen 7, 9 ausgebildete Winkelringe gebildet, die mit dem Horizontalschenkel 27, 29 ihres Profils eine Verlängerung der Oberseite der oberen Laufringe 7, 9 bilden und mit dem Vertikalschenkel 28, 30 ihres Profils zur Propellernabe 1 gerichtet sind. Der Vertikalschenkel 28 des Schmierölschwallrings 16 des Primärverstelllagers 5 ist dabei derart zwischen dem Längsschenkel 25 des Profils des unteren Laufrings 8 des Primärverstelllagers 5 und der inneren Distanzhülse 20 angeordnet, dass ein verbleibender Spalt zwischen der Innenseite des Schmierölschwallrings 16 und der Außenseite des Längsschenkels 25 des unteren Laufrings 8 sowie zwischen der Außenseite der Distanzhülse 20 und der Innenseite des Schmierölschwallrings 16 ein Schmieröl-Überlauflabyrinth 31 zum Sekundärverstelllager bildet. In gleicher Weise ist auch der Vertikalschenkel 30 des Schmierölschwallrings 17 des Sekundärverstelllagers 6 zwischen dem unteren Laufring 10 des Sekundänrerstelllagers 6 und der oberen Ringmutter 15 angeordnet, so dass auch an dieser Stelle ein verbleibender Spalt zwischen der Innenseite des Schmierölschwallrings 17 und der Außenseite des unteren Laufrings 10 sowie zwischen der Außenseite des Schmierölschwallrings 17 und der Innenseite der Ringmutter 15 ein Schmieröl-Überlauflabyrinth 32 zur Dichtung 14 der oberen Ringmutter 15 bildet.

### Bezugszahlenliste

- 1: Propellernabe
- 2: Propellerblatt
- 3: Blattaufnahme
- 4: Blattfuß
- 5: Primärverstelllager
- 6: Sekundärverstelllager
- 7: oberer Laufring von 5
- 8: unterer Laufring von 5
- 9: oberer Laufring von 6
- 10: unterer Laufring von 6
- 11: Wälzkörper von 5
- 12: Wälzkörper von 6
- 13: Schmierölreservoir
- 14: Dichtung
- 15: obere Ringmutter
- 16: Schmierölschwallring an 5
- 17: Schmierölschwallring an 6
- 18: untere Ringmutter
- 19: Ringabsatz
- 20: innere Distanzhülse
- 21: äußerer Distanzring
- 22: Ringsteg
- 23: Querschenkel
- 24: Unterseite
- 25: Längsschenkel
- 26: Ringfläche
- 27: Horizontalschenkel von 16
- 28: Vertikalschenkel von 16
- 29: Horizontalschenkel von 17
- 30: Vertikalschenkel von 17
- 31: Schmieröl-Überlauflabyrinth
- 32: Schmieröl-Überlauflabyrinth

## Patentansprüche

1. Propellerblattlagerung, insbesondere für längsaxial verstellbare Propellerblätter von Flugzeugpropellem, mit folgenden Merkmalen:
■ die Propellerblattlagerung besteht im Wesentlichen aus einer Propellernabe (1), an der mehrere Propellerblätter (2) in einer entsprechenden Anzahl Blattaufnahmen (3) eines Blattträgerrings einzeln befestigt sind,
■ jedes Propellerblatt (2) weist an seinem Blattfuß (4) ein Primärverstelllager (5) und ein Sekundärverstelllager (6) auf und ist innerhalb einer Blattaufnahme (3) längsaxial drehbar gelagert,
■ sowohl das Primärverstelllager (5) als auch das Sekundärverstelllager (6) sind als Schrägwälzlager ausgebildet, die längsaxial zueinander beabstandet angeordnet und gegeneinander verspannt sind,
■ das Primär- und das Sekundärverstelllager (5, 6) weist jeweils einen oberen Laufring (7, 9) und einem unteren Laufring (8, 10) sowie zwischen diesen Laufringen (7, 9, 8, 10) angeordnete Wälzkörper (11, 12) auf,
■ in der Propellernabe (1) ist ein Schmierölreservoir (13) angeordnet, aus welchem das Primär- und das Sekundärlager (5, 6) bei Drehung des Propellers durch Fliehkraft mit Schmieröl versorgt werden,
**dadurch gekennzeichnet, dass**
■ jedes Propellerblatt (2) als jeweils mit beiden Laufringen (7, 9, 8, 10) und den Wälzkörpern (11, 12) des Primärverstelllagers (5) und des Sekundärverstelllagers (6) komplett vormontierte Baueinheit ausgebildet ist,
■ die durch eine obere, mit einer Dichtung (14) zum Blattfuß (4) des Propellerblattes (2) ausgebildete Ringmutter (15) in der Blattaufnahme (3) des Blattträgerrings schmieröldicht verschraubbar ist,
■ wobei die oberen Laufringe (7, 9) des Primär- und des Sekundärverstelllagers (5, 6) mit jeweils deren untere Laufringe (8, 10) axial einseitig umschließenden Schmierölschwallringen (16, 17) in Verbindung stehen,
■ durch die das bei Drehung der Propellerblätter (2) durch Fliehkraft aus dem Schmiermittelreservoir (13) in der Propellernabe (1) aufsteigende Schmieröl größtenteils innerhalb der Verstelllager (5, 6) speicherbar ist,
■ und durch die im Zusammenhang mit einer definierten Füllmenge im Schmierölreservoir (13) das Schmieröl in nur geringer Menge nahezu drucklos an der Dichtung (14) der oberen Ringmutter (15) anliegt.

2. Propellerblattlagerung nach Anspruch 1, **dadurch gekennzeichnet, dass** die aus dem Propellerblatt (2) und den kompletten Verstelllagern (5, 6) bestehende vormontierte Baueinheit **dadurch** gebildet wird, dass das Primärverstelllager (5) und das Sekundärverstelllager (6) über zwischen diesen angeordnete Distanzhalter durch eine untere Ringmutter (18) gegen einen Ringabsatz (19) am Blattfuß (4) des Propellerblattes (2) verspannt sind.

3. Propellerblattlagerung nach Anspruch 2, **dadurch gekennzeichnet, dass** die Distanzhalter zwischen den Verstelllagern (5, 6) einerseits als zwischen dem unteren Laufring (8) des Primärverstelllagers (5) und dem oberen Laufring (9) des Sekundärverstelllagers (6) angeordnete innere Distanzhülse (20) sowie andererseits als zwischen dem oberen Laufring (7) des Primärverstelllagers (5) und dem unteren Laufring (10) des Sekundärverstelllagers (6) angeordneter äußerer Distanzring (21) ausgebildet sind.

4. Propellerblattlagerung nach Anspruch 3, **dadurch gekennzeichnet, dass** der äußere Distanzring (21) zwischen dem Primär- und dem Sekundärverstelllager (5, 6) bevorzugt als einteiliges Integralbauteil mit dem unteren Laufring (10) des Sekundärverstelllagers (6) ausgebildet ist und zusätzlich einen durchmesservergrößerten Ringsteg (22) aufweist, über welchen der Blattfuß (4) des Propellerblattes (2) durch die obere Ringmutter (15) in der Blattaufnahme (3) des Blattträgerrings der Propellernabe (1) verschraubbar ist.

5. Propellerblattlagerung nach Anspruch 3, **dadurch gekennzeichnet, dass** der untere Laufring (8) des Primärverstelllagers (5) bevorzugt einen in Bezug auf die Längsmittelachse der Propellernabe (1) um 180° gedrehten T-förmigen Profilquerschnitt aufweist und mit der Innenseite des Querschenkels (23) dieses Profils auf den Blattfuß (4) des Propellerblatts (2) aufgesetzt ist, wobei die Unterseite (24) dieses Querschenkels (23) zugleich als Druckfläche für die untere Ringmutter (18) ausgebildet ist.

6. Propellerblattlagerung nach Anspruch 5, **dadurch gekennzeichnet, dass** der Längsschenkel (25) und ein Teil des Querschenkels (23) des Profils des unteren Laufrings (8) des Primärverstelllagers (5) die Wälzkörper-Lauffläche des unteren Laufrings (8) bilden und die Ringfläche (26) zwischen dem Blattfuß (4) des Propellerblatts (2) und dem Längsschenkel (25) als Anlagefläche des Primärverstelllagers (5) zu der zwischen diesem und dem Sekundärverstelllager (6) angeordneten inneren Distanzhülse (20) ausgebildet ist.

7. Propellerblattlagerung nach Anspruch 6, **dadurch gekennzeichnet, dass** die mit den oberen Laufringen (7, 9) des Primär- und des Sekundärverstelllagers (5, 6) in Verbindung stehenden Schmierölschwallringe (16, 17) bevorzugt als einteilig mit den oberen Laufringen (7, 9) ausgebildete Winkelringe ausgebildet sind, die mit dem Horizontalschenkel (27, 29) ihres Profils eine Verlängerung der Oberseite der oberen Laufringe (7, 9) bilden und mit dem Vertikalschenkel (28, 30) ihres Profils zur Propellernabe (1) gerichtet sind.

8. Propellerblattlagerung nach Anspruch 7, **dadurch gekennzeichnet, dass** der Vertikalschenkel (28) des Schmierölschwallrings (16) des Primärverstelllagers (5) derart zwischen dem Längsschenkel (25) des Profils des unteren Laufrings (8) des Primärverstelllagers (5) und der inneren Distanzhülse (20) angeordnet ist, dass ein verbleibender Spalt zwischen dem Schmierölschwallring (16) und dem unteren Laufring (8) sowie der Distanzhülse (20) ein Schmieröl-Überlauflabyrinth (31) zum Sekundärverstelllager (6) bildet.

9. Propellerblattlagerung nach Anspruch 8, **dadurch gekennzeichnet, dass** der Vertikalschenkel (30) des Schmierölschwallrings (17) des Sekundärverstelllagers (6) derart zwischen dem unteren Laufring (10) des Sekundärverstelllagers (6) und der oberen Ringmutter (15) angeordnet ist, dass ein verbleibender Spalt zwischen dem Schmierölschwallring (17) und dem unteren Laufring (10) sowie der oberen Ringmutter (15) ein Schmieröl-Überlauflabyrinth (32) zur Dichtung (14) der Ringmutter (15) bildet.

## Claims

1. Propeller blade bearing, in particular for propeller blades which can be adjusted longitudinally axially, on aircraft propellers, having the following features:
• the propeller blade bearing essentially comprises a propeller hub (1) to which a plurality of propeller blades (2) are attached individually in a corresponding number of blade holders (3) in a blade supporting ring,
• each propeller blade (2) has a primary adjustment bearing (5) and a secondary adjustment bearing (6) at its blade root (4) and is mounted within a blade holder (3) such that it can be rotated longitudinally axially,
• both the primary adjustment bearing (5) and the secondary adjustment bearing (6) are in the form of tapered roller bearings which are arranged longitudinally axially at a distance from one another and are braced with respect to one another,
• the primary and the secondary adjustment bearings (5, 6) have a respective upper raceway (7, 9) and a lower raceway (8, 10) as well as roller bodies (11, 12) arranged between these raceways (7, 9, 8, 10),
• a lubricating oil reservoir (13) is arranged in the propeller hub (1) and is used to supply lubricating oil to the primary and secondary bearings (5, 6) by centrifugal force during rotation of the propeller,
**characterized in that**
• each propeller blade (2) is in the form of a completely preassembled unit, in each case with two raceways (7, 9, 8, 10) and the roller bodies (11, 12) of the primary adjustment bearing (5) and the secondary adjustment bearing (6),
• which can be screwed, with a seal for the lubricating oil, by means of an upper ring nut (15), which is formed with a seal (14) with respect to the blade root (4) of the propeller blade (2), in the blade holder (3) of the blade supporting ring,
• with the upper raceways (7, 9) of the primary and secondary adjustment bearings (5, 6) being connected to lubricating oil wave rings (16, 17) which surround the respective lower raceways (8, 10) axially on one side,
• by means of which the majority of the lubricating oil which rises by centrifugal force from the lubricant reservoir (13) at the propeller hub (1) during rotation of the propeller blades (2) can be stored within the adjustment bearings (5, 6),
• and by means of which only a small amount of lubricating oil is located, virtually without any pressure, on the seal (14) of the upper ring nut (15), in conjunction with the lubricating oil reservoir (13) being filled with a defined amount.

2. Propeller blade bearing according to Claim 1, **characterized in that** the preassembled unit which comprises the propeller blade (2) and the complete adjustment bearings (5, 6) is formed **in that** the primary adjustment bearing (5) and the secondary adjustment bearing (6) are braced with respect to an annular step (19) on the blade root (4) of the propeller blade (2) by means of a lower ring nut (18) and via spacers arranged between them.

3. Propeller blade bearing according to Claim 2, **characterized in that** the spacers between the adjustment bearings (5, 6) are on the one hand in the form of an inner spacing sleeve (20) which is arranged between the lower raceway (8) of the primary adjustment bearing (5) and the upper raceway (9) of the secondary adjustment bearing (6), and on the other hand an outer spacing ring (21), which is arranged between the upper raceway (7) of the primary adjustment bearing (5) and the lower raceway (10) of the secondary adjustment bearing (6).

4. Propeller blade bearing according to Claim 3, **characterized in that** the outer spacing ring (21) between the primary adjustment bearing and the secondary adjustment bearing (5, 6) is preferably in the form of an integral component with the lower raceway (10) of the secondary adjustment bearing (6) and additionally has an annular web (22) which enlarges its diameter and by means of which the blade root (4) of the propeller blade (2) can be screwed through the upper ring nut (15) in the blade holder (3) of the blade supporting ring of the propeller hub (1).

5. Propeller blade bearing according to Claim 3, **characterized in that** the lower raceway (8) of the primary adjustment bearing (5) preferably has a T-shaped profile cross section rotated through 180° with respect to the longitudinal centre axis of the propeller hub (1) and with the inside of the lateral limb (23) of this profile is placed on the blade root (4) of the propeller blade (2), with the lower face (24) of this lateral limb (23) at the same time acting as a pressure surface for the lower ring nut (18).

6. Propeller blade bearing according to Claim 5, **characterized in that** the longitudinal limb (25) and a part of the lateral limb (23) of the profile of the lower raceway (8) of the primary adjustment bearing (5) form the roller-body running surface for the lower raceway (8), and the ring surface (26) between the blade root (4) of the propeller blade (4) and the longitudinal limb (25) is in the form of a contact surface between the primary adjustment bearing (5) and the inner spacing sleeve (20), which is arranged between it and the secondary adjustment bearing (6).

7. Propeller blade bearing according to Claim 6, **characterized in that** the lubricating oil wave rings (16, 17) which are connected to the upper raceways (7, 9) of the primary and secondary adjustment bearings (5, 6) are preferably formed integrally with the angled rings which form the upper raceways (7, 9) the profile horizontal limb (27, 29) of which in each case forms an extension of the upper face of the upper raceways (7, 9), and the vertical profile limb (28, 30) of which points towards the propeller hub (1).

8. Propeller blade bearing according to Claim 7, **characterized in that** the vertical limb (28) of the lubricating oil wave ring (16) of the primary adjustment bearing (5) is arranged between the longitudinal limb (25) of the profile of the lower raceway (8) of the primary adjustment bearing (5) and the inner spacing sleeve (20) such that a gap which remains between the lubricating oil wave ring (16) and the lower raceway (8) as well as the spacing sleeve (20) forms a lubricating oil overflow labyrinth (31) for the secondary adjustment bearing (6).

9. Propeller blade bearing according to Claim 8, **characterized in that** the vertical limb (30) of the lubricating oil wave ring (17) of the secondary adjustment bearing (6) is arranged between the lower raceway (10) of the secondary adjustment bearing (6) and the upper ring nut (15) such that a gap which remains between the lubricating oil wave ring (17) and the lower raceway (10) as well as the upper ring nut (15) forms a lubricating oil overflow labyrinth (32) for the seal of the ring nut (15).

## Revendications

1. Support de pale d'hélice, en particulier pour des pales d'hélice d'avion pouvant être déplacées suivant leur axe longitudinal, présentant les caractéristiques suivantes:
• le support de pale d'hélice se compose essentiellement d'un moyeu d'hélice (1), auquel plusieurs pales d'hélice (2) sont fixées individuellement dans un nombre correspondant de logements de pale (3) d'une bague de support de pales,
• chaque pale d'hélice (2) présente à son pied de pale (4) un palier de déplacement primaire (5) et un palier de déplacement secondaire (6) et est montée à rotation autour de son axe longitudinal à l'intérieur d'un logement de pale (3),
• aussi bien le palier de déplacement primaire (5) que le palier de déplacement secondaire (6) sont des paliers de roulement obliques, qui sont disposés à distance l'un de l'autre suivant leur axe longitudinal et sont serrés l'un contre l'autre,
• les paliers de déplacement primaire et secondaire (5, 6) présentent chacun une bague de roulement supérieure (7, 9) et une bague de roulement inférieure (8, 10), ainsi que des corps de roulement (11, 12) disposés entre ces bagues de roulement (7, 9, 8, 10),
• dans le moyeu d'hélice (1), il se trouve un réservoir d'huile de lubrification (13), à partir duquel les paliers de déplacement primaire et secondaire (5, 6) sont alimentés en huile de lubrification sous l'effet de la force centrifuge lors de la rotation de l'hélice,
**caractérisé en ce que**
• chaque pale d'hélice (2) forme une unité de construction complètement préassemblée chaque fois avec les deux bagues de roulement (7, 9, 8, 10) et les corps de roulement (11, 12) du palier de déplacement primaire (5) et du palier de déplacement secondaire (6),
• qui peut être vissée, de façon étanche à l'huile de lubrification, au moyen d'un écrou annulaire supérieur (15) muni d'un joint d'étanchéité (14) par rapport au pied de pale (4) de la pale d'hélice (2) dans le logement de pale (3) de la bague de support de pales,
• dans lequel les bagues de roulement supérieures (7, 9) des paliers de déplacement primaire et secondaire (5, 6) sont en relation avec des bagues d'amenée d'huile de lubrification (16, 17) entourant sur un côté en direction axiale leurs bagues de roulement inférieures respectives (8, 10),
• à travers lesquelles l'huile de lubrification, montant hors du réservoir d'huile de lubrification (13) dans le moyeu d'hélice (1) sous l'effet de la force centrifuge lors de la rotation des pales d'hélice (2), peut être accumulée pour la plus grande partie à l'intérieur des paliers de déplacement (5, 6),
• et à travers lesquelles l'huile de lubrification ne s'applique qu'en faible quantité pratiquement sans pression sur le joint d'étanchéité (14) de l'écrou annulaire supérieur (15), en relation avec un niveau de remplissage défini dans le réservoir d'huile de lubrification (13).

2. Support de pale d'hélice selon la revendication 1, **caractérisé en ce que** l'unité de construction préassemblée, composée de la pale d'hélice (2) et des paliers de déplacement complets (5, 6), est formée **en ce que** le palier de déplacement primaire (5) et le palier de déplacement secondaire (6) sont serrés contre un épaulement annulaire (19) sur le pied de pale (4) de la pale d'hélice (2) par un écrou annulaire inférieur (18) par l'intermédiaire de pièces d'écartement disposées entre ceux-ci.

3. Support de pale d'hélice selon la revendication 2, **caractérisé en ce que** les pièces d'écartement entre les paliers de déplacement (5, 6) sont formées d'une part par une douille d'écartement interne (20) disposée entre la bague de roulement inférieure (8) du palier de déplacement primaire (5) et la bague de roulement supérieure (9) du palier de déplacement secondaire (6) et d'autre part par une bague d'écartement externe (21) disposée entre la bague de roulement supérieure (7) du palier de déplacement primaire (5) et la bague de roulement inférieure (10) du palier de déplacement secondaire (6).

4. Support de pale d'hélice selon la revendication 3, **caractérisé en ce que** la bague d'écartement externe (21) entre les paliers de déplacement primaire et secondaire (5, 6) est de préférence formée par un composé intégral d'un seul tenant avec la bague de roulement inférieure (10) du palier de déplacement secondaire (6) et présente en outre une nervure annulaire de diamètre accru (22), au moyen de laquelle le pied de pale (4) de la pale d'hélice (2) peut être vissé par l'écrou annulaire supérieur (15) dans le logement de pale (3) de la bague de support de pales du moyeu d'hélice (1).

5. Support de pale d'hélice selon la revendication 3, **caractérisé en ce que** la bague de roulement inférieure (8) du palier de déplacement primaire (5) présente de préférence une section transversale de profil en forme de T tournée de 180° par rapport à l'axe central longitudinal du moyeu d'hélice (1) et est posé par la face intérieure de la branche transversale (23) de ce profil sur le pied de pale (4) de la pale d'hélice (2), la face inférieure (24) de cette branche transversale (23) constituant en même temps une surface de pression pour l'écrou annulaire inférieur (18).

6. Support de pale d'hélice selon la revendication 5, **caractérisé en ce que** la branche longitudinale (25) et une partie de la branche transversale (23) du profil de la bague de roulement inférieure (8) du palier de déplacement primaire (5) forment la surface de roulement des corps de roulement de la bague de roulement inférieure (8) et la surface annulaire (26) entre le pied de pale (4) de la pale d'hélice (2) et la branche longitudinale (25) constitue une surface d'appui du palier de déplacement primaire (5) vers la douille d'écartement interne (20) disposée entre celui-ci et le palier de déplacement secondaire (6).

7. Support de pale d'hélice selon la revendication 6, **caractérisé en ce que** les bagues d'amenée d'huile de lubrification (16, 17), qui sont en relation avec les bagues de roulement supérieures (7, 9) des paliers de déplacement primaire et secondaire (5, 6), sont de préférence formées par des bagues coudées formées d'un seul tenant avec les bagues de roulement supérieures (7, 9), qui forment avec la branche horizontale (27, 29) de leur profil un prolongement de la face supérieure des bagues de roulement supérieures (7, 9) et sont orientées avec la branche verticale (28, 30) de leur profil vers le moyeu d'hélice (1).

8. Support de pale d'hélice selon la revendication 7, **caractérisé en ce que** la branche verticale (28) de la bague d'amenée d'huile de lubrification (16) du palier de déplacement primaire (5) est disposée entre la branche longitudinale (25) du profil de la bague de roulement inférieure (8) du palier de déplacement primaire (5) et la douille d'écartement interne (20), de telle manière qu'une fente résiduelle entre la bague d'amenée d'huile de lubrification (16) et la bague de roulement inférieure (8) ainsi que la douille d'écartement (20) forme un labyrinthe de débordement d'huile de lubrification (31) vers le palier de déplacement secondaire (6).

9. Support de pale d'hélice selon la revendication 8, **caractérisé en ce que** la branche verticale (30) de la bague d'amenée d'huile de lubrification (17) du palier de déplacement secondaire (6) est disposée entre la bague de roulement inférieure (10) du palier de déplacement secondaire (6) et l'écrou annulaire supérieur (15), de telle manière qu'une fente résiduelle entre la bague d'amenée d'huile de lubrification (17) et la bague de roulement inférieure (10) ainsi que l'écrou annulaire supérieur (15) forme un labyrinthe de débordement d'huile de lubrification (32) vers le joint d'étanchéité (14) de l'écrou annulaire (15).
